# FASCICULE DE BREVET EUROPEEN

(11) **EP 2 339 922 B1**
(45) Date de publication et mention de la délivrance du brevet: **27.03.2013**
(21) Numéro de dépôt: 09748421.6
(22) Date de dépôt: 22.09.2009
(51) Int. Cl.: A23B 7/153, A23B 7/16, A23L 1/00, A23L 1/212, A23L 3/34, A23L 3/3454, A23N 15/00, A23P 1/08, A23N 15/06, B05D 1/30

(54) **DISPOSITIF D'ENROBAGE DE PRODUITS ALIMENTAIRES NOTAMMENT DE FRUITS ET LÉGUMES**
VORRICHTUNG ZUM ÜBERZIEHEN VON NAHRUNGSMITTELPRODUKTEN, INSBESONDERE OBST UND GEMÜSE
DEVICE FOR COATING FOOD PRODUCTS, PARTICULARLY FRUITS AND VEGETABLES

(30) Priorité: 22.09.2008 FR 0856351; 02.02.2009 WO PCT/FR2009/050153; 02.02.2009 WO PCT/FR2009/050152
(43) Date de publication de la demande: 06.07.2011
(73) Titulaire: Xeda International, 13670 Saint Andiol (FR)
(72) Inventeur: SARDO, Alberto, F-13160 Chateaurenard (FR); SARDO, Stefano, F-13160 Chateaurenard (FR)
(74) Mandataire: Domenego, Bertrand
(86) Numéro de dépôt international: PCT/FR2009/051783
(87) Numéro de publication internationale: WO 2010/031983

(56) Documents cités:
- EP-A1- 1 201 130
- KR-B1- 100 827 758
- US-A- 1 964 275
- US-A- 2 033 044
- US-A- 2 372 225
- US-A- 2 866 709
- US-A- 3 818 859
- US-A- 5 101 763
- US-A- 5 148 738
- US-A- 5 451 266

## Description

L'invention concerne en général l'enrobage des produits alimentaires, notamment des fruits et légumes.

Plus précisément, l'invention concerne un dispositif d'enrobage de produit alimentaire selon le préambule de la revendication 1.

FR 2 912 605 décrit un dispositif d'enrobage avec une zone d'enrobage et une zone de séchage.

US 2 033 044 décrit un dispositif d'enrobage conforme au préambule de la revendication 1.

KE 100 827 758 dérit un dispositif d'enrobage dont la zone de séchage est équipée d'un convoyeur à rouleaux fixes.

US 1 964 275 décrit un dispositif d'enrobage avec un convoyeur unique, à rouleaux mobiles, desservant à la fois la zone d'enrobage et la zone de séchage.

On a observé qu'il était difficile, dans certains cas, d'obtenir une application de bonne qualité sur les produits alimentaires.

Certaines zones des produits peuvent être mal couvertes par la composition. L'épaisseur de la couche peut être mal contrôlée.

Dans ce contexte, l'invention vise à proposer un dispositif permettant un enrobage de meilleure qualité.

A cette fin, l'invention porte sur un dispositif selon la revendication 1.

Le dispositif peut en outre présenter une ou plusieurs des caractéristiques ci-dessous, considérées individuellement ou selon toutes les combinaisons techniquement possibles.

Le dispositif d'application est prévu pour projeter la composition d'enrobage sur les produits alimentaires à une pression contrôlée supérieure à la pression atmosphérique.

Le dispositif d'application comprend au moins un organe de projection disposé au dessus du convoyeur d'enrobage, et un organe doseur prévu pour alimenter le ou chaque organe de projection en composition d'enrobage à un débit contrôlé.

Les brosses présentent un diamètre externe compris entre 60 et 180 mm.

La zone de séchage est disposée à l'intérieur d'une enceinte fermée, ladite enceinte fermée comportant au moins une prise d'air, au moins une sortie d'air, et au moins un organe prévu pour créer une circulation d'air dans l'enceinte fermée depuis les prises d'air jusqu'à la sortie d'air.

Le convoyeur de séchage comprend un tronçon de déplacement des produits alimentaires depuis la zone d'enrobage jusqu'à une sortie, la ou chaque prise d'air étant située à un niveau inférieur au tronçon de déplacement et la sortie d'air étant située à un niveau supérieur au tronçon de déplacement.

L'organe de circulation d'air présente une entrée d'aspiration d'air et une sortie de refoulement d'air et est apte à créer entre la sortie et l'entrée une différence de pression supérieure à 30 mm de colonne d'eau.

Les éléments d'entraînement sont des rouleaux.

Selon un second aspect, l'invention porte sur l'utilisation d'une composition d'enrobage qui comprend un ou plusieurs agents filmogènes dans un solvant, le solvant étant choisi parmi l'eau, un alcool ou un alcane.

L'agent filmogène peut être la gomme laque.

Ladite composition peut comprendre en outre un ou plusieurs terpène(s).

Ladite composition peut comprendre en outre une base.

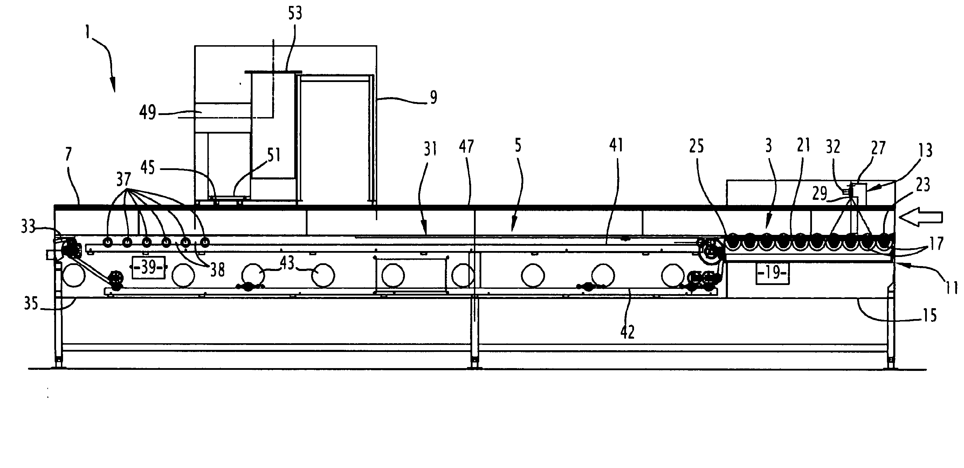

D'autres caractéristiques et avantages ressortiront de la description détaillée de l'invention donnée ci-dessous, en référence à la figure annexée, qui est une représentation schématique, en élévation, d'un dispositif d'enrobage conforme à l'invention.

Le dispositif représenté sur la figure est destiné à l'enrobage de produits alimentaires, notamment de fruits et légumes. Ces produits sont généralement enrobés d'un agent filmogène avant leur commercialisation pour améliorer leur conservation et leur aspect pour le consommateur.

Le dispositif 1 comporte :
- une zone 3 d'enrobage des produits alimentaires ;
- une zone 5 de séchage des produits alimentaires enrobés ;
- une enceinte 7 fermée, dans laquelle sont disposées les zones d'enrobage et de séchage 3 et 5 ;
- un dispositif de ventilation 9 de l'enceinte fermée 7.

La zone d'enrobage 3 comporte un convoyeur d'enrobage 11 prévu pour entraîner les produits alimentaire selon une direction longitudinale, et un dispositif 13 d'application d'une composition d'enrobage sur les produits alimentaires entraînés sur le convoyeur.

Le convoyeur d'enrobage 11 comprend un châssis 15, une pluralité de brosses 17 rotatives montées sur le châssis 15, et un ensemble motorisé 19 d'entraînement des brosses 17 en rotation autour d'axes transversaux respectifs par rapport au châssis.

Les brosses 17 sont cylindriques, et présentent chacune un diamètre extérieur compris entre 60 et 180 millimètres, de préférence compris entre 80 et 120 millimètres. En tout état de cause, les brosses doivent présenter un diamètre extérieur supérieur au diamètre des produits alimentaires à traiter.

Les brosses 17 sont fixes en translation selon les directions longitudinales et transversales par rapport au châssis 15. Elles ne présentent donc qu'un seul degré de liberté par rapport au châssis 15, en rotation autour de leurs axes respectifs.

Comme le montre la figure, les brosses 17 sont disposées parallèlement les unes aux autres, et sont régulièrement espacées longitudinalement. L'espacement est prévu de telle sorte que les brosses soient sensiblement tangentes les unes aux autres, ou que les poils de chaque brosse pénètrent légèrement dans les brosses voisines. Les axes des brosses sont situés dans un même plan, sensiblement horizontal, de telle sorte que les brossent définissent ensemble une surface 21 de support et d'entraînement des produits alimentaires. Ainsi, les produits alimentaires déposés à une extrémité amont 23 de la surface 21 sont entraînés par les brosses jusqu'à l'extrémité aval 25 de la surface 21. Les brosses sont prévues pour faire rouler les produits alimentaires sur eux-mêmes au cours du déplacement longitudinal de ces produits depuis l'extrémité amont vers l'extrémité aval de la surface 21.

Ce roulement est obtenu d'abord du fait que la surface 21 présente des bosses, aux sommets des brosses 17, et des creux entre les brosses 17. Un produit alimentaire atteignant le sommet d'une brosse 17 va rouler dans le creux suivant. Par ailleurs, les poils des brosses 17, en s'appuyant sur la surface extérieure du produit alimentaire, tendent à faire tourner ce produit en sens inverse de la brosse. Ce mouvement est similaire à l'entraînement d'une roue dentée par un pignon

L'ensemble motorisé 19 entraîne les brosses 17 en rotation autour de leurs axes respectifs. Les brosses 17 sont mises en rotation toutes dans le même sens, le sens de rotation étant le sens antihoraire dans la représentation de la figure.

Le dispositif 13 d'application de la composition d'enrobage est prévu pour projeter la composition d'enrobage sur les produits alimentaires circulant sur le convoyeur d'enrobage 11, à une pression contrôlé supérieure à la pression atmosphérique, et avec un débit contrôlé. La pression et le débit sont choisis en fonction du type de produit alimentaire à traiter, et en fonction de la nature de la composition d'enrobage.

Le dispositif d'application comprends typiquement une cuve 27 de stockage d'une réserve de composition d'enrobage, une pluralité de gicleurs 29 repartis longitudinalement au-dessus du convoyeur 11, et un organe doseur 32 prévu pour alimenter les gicleurs 29 en composition d'enrobage à partir de la cuve 27. Seul un gicleur 29 a été représenté sur la figure.

Le gicleur peut être de tout type adapté. Il comporte typiquement une buse permettant de régler la largeur du jet de composition d'enrobage projeté vers le convoyeur. L'organe doseur 32 est par exemple une pompe doseuse à débit réglable.

Les buses de projection des gicleurs sont typiquement placées à 15 centimètres au dessus de la surface 21 sur laquelle se déplacent les produits alimentaires.

Le débit de composition d'enrobage est typiquement compris entre 1 et 10 litres par tonne de préférence 2 et 5 litres par heure. La pression d'alimentation des gicleurs est typiquement comprise entre 1 et 10 de préférence 2 et 5 bars.

La zone de séchage 5 comprend un convoyeur de séchage 31 prévu pour entraîner les produits alimentaires enrobés depuis l'extrémité aval 25 de la surface 21 jusqu'à une sortie 33, par laquelle les produits alimentaires séchés quittent le dispositif d'enrobage.

Le convoyeur de séchage 31 est du type à rouleaux mobiles, et comporte un châssis 35, une pluralité de rouleaux 37 d'entraînement des produits alimentaires, et un ensemble motorisé 39 de déplacement des rouleaux d'entraînement par rapport au châssis.

Le châssis peut être commun ou séparé de celui du convoyeur d'enrobage 11.

Le convoyeur 31 comporte deux tronçons, un tronçon 41 de transport le long duquel les rouleaux 37 entraînent les produits alimentaires depuis la zone d'enrobage 3 jusqu'à la sortie 33, et un tronçon de retour 42 permettant de ramener les rouleaux 37 depuis la sortie 33 jusqu'à l'extrémité aval 25 de la surface 21.

Le tronçon de transport 41 est rectiligne et prolonge longitudinalement le convoyeur d'enrobage.

Le tronçon de retour 42 est également rectiligne. Il est situé sous le tronçon de transport 41.

Les rouleaux 37 sont par exemple de formes générales cylindriques et sont disposés parallèlement les uns aux autres, leurs axes respectifs étant transversaux. Ils présentent un diamètre externe compris entre 5 et 60 millimètres, de préférence sensiblement égal à 10 millimètres. Ils sont espacés longitudinalement les uns des autres, de manière à ménager entre eux un espace d'au moins 10 millimètres de largeur, par exemple de 10 à 40 millimètres de largeur, de préférence de 25 millimètres de largeur. La largeur est prise ici suivant la direction de déplacement. Les espaces 38 laissés entre les rouleaux 37 permettent la circulation d'air de séchage des produits alimentaires.

L'enceinte 7 comporte une pluralité de prises d'air 43, réparties longitudinalement le long du convoyeur de séchage. Les prises d'air 43 sont situées, suivant la direction verticale, en dessous du tronçon de transport 41 du convoyeur et au-dessus du tronçon de retour 42.

L'enceinte 7 comporte également une sortie d'air 45, ménagée sur le toit 47 de l'enceinte.

Le dispositif de ventilation 9 comporte un extracteur d'air 49 dont l'aspiration 51 est raccordée à la sortie d'air 45. L'extracteur 49 est par exemple monté sur le toit 47 de l'enceinte. Il est typiquement de type centrifuge. L'extracteur est de préférence un extracteur de forte puissance, de manière à permettre un débit important d'air de ventilation dans la zone de séchage, depuis les prises d'air 43 jusqu'à la sortie d'air 45 et à permettre un séchage rapide des produits alimentaires et maintenir une basse concentration dans l'air en alcool (en-dessous du seuil d'inflammabilité).

L'extracteur 49 présente par exemple une différence de pression entre l'entrée d'aspiration d'air 51 et la sortie de refoulement d'air 53 supérieure à 30 millimètres de colonne d'eau, de préférence supérieure à 60 millimètres de colonne d'eau, et valant typiquement 70 millimètres de colonne d'eau.

Bien que le dispositif selon l'invention ne soit pas limité quant à la nature des compositions d'enrobage appliquées, il est particulièrement adapté à l'application de compositions d'enrobage de produits alimentaires au moyen d'un agent filmogène.

On appelle agent filmogène tout agent apte à former une pellicule comestible perméable ou semi-perméable capable de réduire et/ou empêcher les échanges gazeux dudit produit alimentaire avec l'air ambiant à base de résine(s) convenant à l'enrobage de produits alimentaires.

La(les) résine(s) peu(ven)t être choisie(s) parmi la résine coumaron-indène, la gomme-laque, ou les résines comprenant l'acide abiétique, et/ou un ou plusieurs ester(s) d'acide abiétique ou leurs mélanges, le(s)dit(s) ester(s) d'acide abiétique étant choisi(s) parmi l'ester d'acide abiétique avec le glycérol ou le pentaérythritol. Lesdites résines comprenant l'acide abiétique, un ou plusieurs ester(s) d'acide abiétique ou leurs mélanges sont de préférence choisies parmi les résines ester gum, Pexalyn®, Pentalyn®, Permalyn®.

La composition d'enrobage peut également comprendre en outre un ou plusieurs terpènes, notamment choisi(s) parmi les terpènes non porteurs d'oxygène, tels que les pinènes et le limonène.

Par produit alimentaire, on entend tout aliment tel que les fruits, légumes, fromages ou oeufs notamment habituellement enrobés pour sa conservation ; on préfère particulièrement les fruits ou légumes.

Selon un premier aspect, ledit agent filmogène est en solution dans un solvant.

Avantageusement, ledit solvant est choisi parmi l'eau, un alcool ou un alcane léger, notamment un alcool en C2-C3 ou un alcane en C6-C10. On peut notamment citer l'éthanol ou l'hexane.

L'utilisation d'alcool à titre de solvant est particulièrement avantageuse en ce qu'il possède une activité désinfectante, voire stérilisante du produit alimentaire contre les contaminations présentes à sa surface.

De préférence, lorsque un solvant hydrosoluble, tel que les alcools notamment, est utilisé, il est souhaitable que la composition d'enrobage comprenne en outre une base. En effet, les inventeurs ont démontré qu'en présence d'humidité résiduelle (par exemple condensation d'eau sur les produits alimentaires à traiter, humidité ambiante, etc.), il se produisait une perte de solubilité importante de résine dans ledit solvant hydrosoluble. Cette perte de solubilité provoque ainsi un enrobage de mauvaise qualité, de sorte que les produits alimentaires ainsi traités n'auraient pas l'aspect brillant escompté. De façon inattendue, les inventeurs ont désormais découvert que l'ajout de base dans la composition d'enrobage à base de solvant hydrosoluble permet d'améliorer la solubilité de la résine dans le solvant en présence d'eau, de sorte que l'enrobage présente une qualité satisfaisante, même en présence d'eau.

Plus préférentiellement, ladite composition peut être choisie parmi :
- les solutions de gomme laque dans un alcool et/ou l'eau ;
- les solutions d'acide abiétique, d'esters d'acide abiétique et/ou de leurs mélanges dans un alcool et/ou l'eau, éventuellement en présence d'un terpène,
- les solutions de résines coumarone-indène dans un alcane et/ou l'eau ou leurs mélanges,
- les solutions de lécithine(s) et/ou dérivés dans l'eau,
- les solutions de carboxyméthylcellulose dans l'eau,
- les solutions de dérivés polymérisés de sucres dans l'eau.

Les compositions selon l'invention comprennent généralement :
- entre 1 % et 35 % en poids de résine(s) ;
- entre 0 % et 50 % en poids de terpène(s) ;
- entre 15 % et 99 % en poids de solvant ; et
- entre 0 et 10% en poids de base.

A titre de composition, on peut notamment citer les compositions suivantes :
- coumaron-indène dans l'hexane ;
- abiétate de glycérol dans l'alcool éthylique ;
- gomme-laque dans l'alcool éthylique ;
éventuellement en présence de limonène, et/ou base.

On cite particulièrement les compositions à base de gomme laque dans l'éthanol, comprenant éventuellement terpène(s), base(s) et/ou ester(s) d'acide abiétique..

Plus précisément, on préfère notamment les compositions suivantes :
- gomme laque : 9%,
- alcool éthylique : 89%,
- ammoniaque : 2% ;
   ou
- résine coumaron-indène : 7%
- hexane : 93% ;
   ou
- abiétate de glycérol : 11 %,
- alcool éthylique : 67%,
- morpholine : 2%,
- limonène : 20%.

Lesdites compositions peuvent également comprendre en outre d'autres solvants, des huiles végétales, des émulsifiants.

Les pourcentages indiqués ici sont donnés en poids.

Les compositions d'enrobage sont de préférence appliquées pures, sans dilution préalable.

La quantité de composition devant être appliquée dépend de la nature des produits alimentaires concernés et du mode d'application sélectionné. Généralement, on applique entre 1000 et 5000 cm³ de la composition par tonne de produits alimentaires (entre 10⁻⁶ et 5.10⁻⁶ m³ de la composition par kg de produits alimentaires), préférentiellement entre 2 et 10 litres/t (entre 2.10⁻⁶ et 10⁻⁵ m³/kg).

Le solvant des compositions en solution est généralement évaporé à l'air par aspiration suivie d'extraction ou absorption.

A titre de résines, on peut notamment citer les résines coumaron-indène, les résines de type gomme laque (E904), résines de pin, l'acide abiétique ou les esters de l'acide abiétique tels que les esters avec le glycérol ou le pentaérythritol (E445), les résines estérifiées modifiées chimiquement par création de l'adduct maléique ou fumarique ou leurs mélanges.

L'expression « ester(s) d'acide abiétique » comprend un ou plusieurs esters de l'acide abiétique avec un alcool, leur(s) mélange(s) ainsi que toute résine comprenant un ou plusieurs ester(s) d'acide abiétique ou leur(s) mélange(s). On préfère notamment l'ester d'acide abiétique avec le glycérol ou le pentaérythritol, plus préférentiellement l'abiétate de glycérol. On peut notamment citer les résines commerciales Ester Gum, Pexalyn® ou Pentalyn® commercialisées par Hercules Inc., ou Permalyn® commercialisée par Eastman.

A titre de terpènes non porteurs d'oxygènes, on peut citer les pinènes et le limonène, et plus particulièrement le limonène.

L'expression "fruits ou légumes" fait préférentiellement référence aux agrumes, tels que les oranges, citrons, clémentines, pamplemousses, mandarines, ou encore les pommes, ou tout fruit ou légume habituellement enrobé par résine.

Les tensioactifs ou émulsifiants variés sont connus en soi. Selon la présente invention, on entend par "émulsifiant" tout type d'agent habituellement utilisé à cet effet, tels que les alcools gras éthoxylés, les acides gras éthoxylés, les alkylphénols éthoxylés ou tout autre produit non ionique.

Des exemples de tensioactifs non ioniques utilisables selon l'invention sont notamment le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécyclique) avec 30 moles d'oxyde d'éthylène.

Les émulsifiants peuvent également contenir d'autres agents habituellement utilisés dans les cires d'enrobage.

Les émulsifiants non ioniques incluent notamment les sucroesters, les sorbitans monoléate éthoxylés, les acides gras éthoxylés, la lécithine, les acides gras estérifiés tels que l'oléate de glycérol et leurs mélanges.

Des exemples de tensioactifs anioniques utilisables selon l'invention sont notamment : les sels alcalins des acides gras avec base, organique ou minérale, tel que hydroxydes de métal alcalin (soude ou potasse), ammoniaque ou amine(s). Le sel peut-être introduit dans la composition ou formé *in situ.*

L'invention n'est cependant pas limitée à l'utilisation de ces tensioactifs particuliers.

A titre de base, peuvent être citées les bases, organiques ou minérales, telles que les hydroxydes de métal alcalin (soude ou potasse), ammoniaque ou les bases de type amine(s), telles que diéthylamine, morpholine.

Généralement, la base est comprise entre 0 et 10% en poids de la composition d'enrobage, de préférence entre 0,1 et 5%, plus préférentiellement entre 1 et 5%.

De préférence, l'application de la composition est effectuée après récolte et avant la commercialisation des produits alimentaires, à température ambiante. Les compositions selon l'invention peuvent être appliquées une ou plusieurs fois.

De préférence, les compositions sont appliquées sur des produits alimentaires préalablement séchés.

Le fonctionnement du dispositif d'enrobage décrit ci-dessus va maintenant être détaillé.

Les produits alimentaires enrobés sont déposés à l'extrémité amont 23 de la surface 21 du convoyeur d'enrobage. Ils sont déposés manuellement par un opérateur, ou sont amenés par un autre convoyeur non représenté.

Les produits alimentaires sont entrainés longitudinalement depuis l'extrémité amont 23 jusqu'à l'extrémité aval 25 par les brosses 17. Les brosses 17 sont entraînées en rotation en sens antihoraire sur la figure par l'ensemble d'entraînement 19.

Les poils des brossent glissent contre la peau des produits alimentaires en entrainant longitudinalement ces produits.

Les produits alimentaires de formes générales arrondis, par exemples les pommes, les poires, les agrumes, les pommes de terres, etc., roulent pendant leurs déplacements longitudinales sur le convoyeur d'enrobage.

Pendant le déplacement des produits alimentaires sur le convoyeur, le dispositif d'application 13 projette la composition d'enrobage vers les produits alimentaires. La pompe 32 aspire la solution d'enrobage dans le réservoir 27 et refoule composition vers les gicleurs 29 à une pression déterminée et à un débit déterminé. Les gicleurs 29 projettent la composition d'enrobage vers le bas, c'est-à-dire vers les produits alimentaires. Du fait que les produits alimentaires roulent à la surface du convoyeur, toutes les zones de la peau du produit alimentaire sont successivement tournées vers les gicleurs et reçoivent une dose de composition d'enrobage. Ainsi, le fait que les produits alimentaires roulent sur le convoyeur et l'utilisation d'un dispositif d'application permettant de projeter la composition d'enrobage à un débit et à une pression contrôlés sur les produits alimentaires, permettent un excellent contrôle de l'épaisseur de composition d'enrobage déposée à la surface du produit alimentaire, et une application particulièrement uniforme sur toute la peau du produit alimentaire.

Les produits alimentaires quittent le convoyeur d'enrobage à l'extrémité aval 25 de la surface 21 et passent directement à une extrémité amont du tronçon de transport 41 du convoyeur de séchage 31.

Ils viennent alors se caler entre deux rouleaux 37 du convoyeur de séchage, l'espace entre deux rouleaux étant prévu pour que les produits alimentaires puissent se caler de manière stable, et sans tomber entre les deux rouleaux à travers l'espace 38 prévu pour la circulation d'air

Les rouleaux 37 sont entraînés longitudinalement vers l'évacuation 33, par l'ensemble motorisé 39. Ils entraînent avec eux les produits alimentaires. Les produits alimentaires ne roulent pas pendant leurs déplacements le long des convoyeurs de séchage et restent généralement immobiles par rapport aux rouleaux 37. En arrivant à la sortie 33, ils sont prélevés à la main par des opérateurs pour être conditionnés ou sont par exemple repris par un autre convoyeur.

L'extracteur d'air 49 aspire de l'air à l'intérieur de l'enceinte 7, par la sortie d'air 45. Il refoule l'air dans l'atmosphère. Il crée ainsi une circulation d'air à l'intérieur de l'enceinte 7, depuis les prises d'air 43 jusqu'à la sortie d'air 45. Il crée également une circulation d'air de l'extérieur vers l'intérieur de l'enceinte 7 au niveau de la sortie 33 et au niveau de l'extrémité amont 23 de la surface 21.

L'air pénétrant dans l'enceinte 7 par les prises d'air 43, situées sous le tronçon de transport 39, se déplace vers le haut à travers les espaces 38 ménagés entre les rouleaux 37, jusqu'à la sortie d'air 45.

En passant entre les rouleaux 37, il lèche les produits alimentaires ce qui contribue au séchage de la composition d'enrobage.

De préférence, l'enceinte fermée 7 présente une largeur transversale qui n'est que très légèrement supérieur à la largeur transversale des rouleaux 37, de telle sorte que la majeure partie de l'air rentrant par les prises d'air 43 est forcé de circuler à travers les espaces 38 entre les rouleaux 37.

Le débit d'air extrait par l'extracteur 49 est contrôlé à une valeur élevée. Ceci offre deux avantages. La composition d'enrobage sèche particulièrement rapidement sur les produits alimentaires. Ainsi, il est possible de sécher non seulement les couches superficielles de composition d'enrobage, mais également les couches de composition d'enrobage qui ne sont pas directement en contact de l'air, et se trouvent en contact avec la peau du produit alimentaire. Avec un faible débit d'air, il est parfois difficile de sécher la couche de composition d'enrobage en profondeur, les couches superficielles se solidifiant alors que les couches les plus profondes restent humides. Par ailleurs, le fait de sécher rapidement la solution d'enrobage permet de raccourcir la longueur du convoyeur de séchage, et donc de diminuer le coût du dispositif d'enrobage.

Par ailleurs, le fait que la composition d'enrobage contienne un solvant très volatile de type alcool ou alcane contribue au séchage rapide de la solution d'enrobage sur le convoyeur de séchage.

Ainsi, le dispositif d'enrobage décrit ci-dessus permet d'obtenir un enrobage de bonne qualité, et ce pour toutes sortes de produits alimentaires.

Le fait que le convoyeur d'enrobage comporte des brosses prévues pour faire rouler les produits alimentaires pendant l'application de la composition d'enrobage contribue à l'obtention d'un film de composition d'enrobage uniforme et d'épaisseur contrôlée sur les produits alimentaires. L'épaisseur du film peut ainsi être ajustée en fonction de la nature du produit alimentaire, chaque produit alimentaire devant être traité de manière spécifique pour une conservation optimum dans le temps.

Par ailleurs, le séchage est lui aussi optimisé de façon à permettre le séchage rapide de la composition d'enrobage et ce sur toute l'épaisseur du film de solution de l'enrobage. Ceci est réalisé entre autre du fait que la composition d'enrobage comporte un solvant de type alcool ou alcane, du fait que les rouleaux du convoyeur de séchage sont écartés les uns des autres pour créer un espace de circulation d'air, et du fait de l'utilisation d'un extracteur d'air particulièrement puissant.

Le dispositif d'enrobage peut présenter de multiples variantes.

Le nombre de rouleaux du convoyeur d'enrobage peut varier, en fonction des besoins. Le nombre de gicleurs est également variable, un seul gicleur pouvant être envisagé, ou un grand nombre de gicleurs, en fonction du type et de la taille des produits alimentaires à traiter, de la vitesse de déplacement des produits alimentaires à la surface du convoyeur d'enrobage, du type de composition d'enrobage, etc.

Le dispositif d'application peut ne pas être du type prévu pour projeter la composition d'enrobage sous une pression supérieure à la pression atmosphérique. Le dispositif d'application pourrait être un dispositif de douchage, prévu pour faire couler la composition d'enrobage sur les produits alimentaires, à une pression correspondant à la pression atmosphérique. Le dispositif d'application pourrait également être un dispositif de pulvérisation par nébulisation ou atomisation.

Le convoyeur de séchage n'est pas nécessairement aligné avec le convoyeur d'enrobage.

Le convoyeur de séchage peut, à la place des rouleaux 37, comporter d'autres types d'éléments pour entraîner les produits alimentaires. Ces éléments peuvent être de tous types, de toutes formes et être réalisés en toutes sortes de matériau.

L'extracteur d'air 49 peut être remplacé par un ventilateur prévu pour souffler de l'air à l'intérieur de l'enceinte 7, à travers les prises d'air 43.

## Revendications

1. Dispositif d'enrobage de produits alimentaires, le dispositif (1) ayant une zone d'enrobage (3) comprenant :
- un convoyeur d'enrobage (11) prévu pour entraîner les produits alimentaires selon une direction longitudinale ;
- un dispositif (13) d'application d'une composition d'enrobage sur les produits alimentaires entraînés sur le convoyeur d'enrobage (11) ;
le convoyeur d'enrobage (11) comprenant un châssis (15), une pluralité de brosses rotatives (17) fixes selon la direction longitudinale par rapport au châssis (15), et un ensemble motorisé (19) d'entraînement des brosses (17) en rotation autour d'axes transversaux respectifs par rapport au châssis (15), les brosses (17) étant disposées de manière à définir ensemble une surface (21) de support et d'entraînement des produits alimentaires et étant prévues pour faire rouler les produits alimentaires pendant l'application de la composition d'enrobage, le dispositif (1) ayant une zone de séchage (5) des produits alimentaires comprenant un convoyeur de séchage (31) prévu pour entraîner les produits alimentaires enrobés sortant de la zone d'enrobage (3) suivant une direction de déplacement, **caractérisé en ce que** le convoyeur de séchage (31) comprend un châssis (35), une pluralité d'éléments (37) d'entraînement des produits alimentaires, et un ensemble motorisé (39) de déplacement des éléments d'entraînement (37) par rapport au châssis (35) suivant la direction de déplacement, les éléments d'entraînement (37) présentant entre eux suivant la direction de déplacement un espace (38) d'au moins 10 mm de largeur prévu pour la circulation d'air de séchage des produits alimentaires.

2. Dispositif selon la revendication 1, **caractérisé en ce que** le dispositif d'application (13) est prévu pour projeter la composition d'enrobage sur les produits alimentaires à une pression contrôlée supérieure à la pression atmosphérique.

3. Dispositif selon la revendication 2, **caractérisé en ce que** le dispositif d'application (13) comprend au moins un organe de projection (29) disposé au dessus du convoyeur d'enrobage (11), et un organe doseur (32) prévu pour alimenter le ou chaque organe de projection (29) en composition d'enrobage à un débit contrôlé.

4. Dispositif selon l'une quelconque des revendications précédentes, **caractérisé en ce que** les brosses (17) présentent un diamètre externe compris entre 60 et 180 mm.

5. Dispositif selon l'une quelconque des revendications précédentes, **caractérisé en ce que** la zone de séchage (5) est disposée à l'intérieur d'une enceinte fermée (7), ladite enceinte fermée (7) comportant au moins une prise d'air (43), au moins une sortie d'air (45), et au moins un organe (49) prévu pour créer une circulation d'air dans l'enceinte fermée (7) depuis les prises d'air (43) jusqu'à la sortie d'air (45).

6. Dispositif selon la revendication 5, **caractérisé en ce que** le convoyeur de séchage (31) comprend un tronçon (41) de déplacement des produits alimentaires depuis la zone d'enrobage (3) jusqu'à une sortie (33), la ou chaque prise d'air (43) étant située à un niveau inférieur au tronçon de déplacement (41) et la sortie d'air (45) étant située à un niveau supérieur au tronçon de déplacement (41).

7. Dispositif selon la revendication 5 ou 6, **caractérisé en ce que** l'organe de circulation d'air (49) présente une entrée d'aspiration d'air (51) et une sortie de refoulement d'air (53) et est apte à créer entre la sortie (53) et l'entrée (51) une différence de pression supérieure à 30 mm de colonne d'eau.

8. Dispositif selon l'une quelconque des revendicatons précédentes, **caractérisé en ce que** les éléments d'entraînement (37) sont des rouleaux.

9. Utilisation d'une composition d'enrobage comprenant un ou plusieurs agents filmogènes dans un solvant, le solvant étant choisi parmi l'eau, un alcool ou un alcane, dans un dispositif d'enrobage selon l'une quelconque des revendications précédentes.

10. Utilisation selon la revendication 9, **caractérisé en ce que** l'agent filmogène est la gomme laque.

11. Utilisation selon la revendication 9 à 10 **caractérisé en ce que** ladite composition comprend en outre un ou plusieurs terpène(s).

12. Utilisation selon l'une quelconque des revendications 9 à 11 **caractérisé en ce que** ladite composition comprend en outre une base.

## Claims

1. A device for coating food products, the device (1) being of the type having a coating area (3) comprising:
- a coating conveyor (11) provided to drive said food products in a longitudinal direction;
- a device (13) for applying a coating compound on the food products driven on the conveyor (11);
the coating conveyor (11) comprising a chassis (15), a plurality of rotary brushes (17) fastened in the longitudinal direction relative to the chassis (15), and a motorized assembly (19) for driving the brushes (17) in rotation around respective transverse axes relative to the chassis (15), the brushes (17) being arranged so as to define, together, a support and driving surface (21) for the food products and being provided to make the food products roll during the application of the coating compound, the device (1) having a drying area (5) for food products comprising a drying conveyor (31) provided to drive the coated food products exiting the coating area (3) in a direction of travel, **characterized in that** the drying conveyor (31) comprises a chassis (35), a plurality of driving elements (37) for driving the food products, and a motorized assembly (39) for moving the driving elements (37) in relation to the chassis (35) in the direction of movement, the driving elements (37) having, in the direction of movement, a space (38) at least 10 mm wide between them for the flow of air to dry the food products.

2. The device according to any one of the preceding claims, **characterized in that** the application device (13) is provided to project the coating compound on the food products at a controlled pressure greater than the atmospheric pressure.

3. The device according to claim 2, **characterized in that** the application device (13) comprises at least one projection member (29) arranged above the coating conveyor (11), and a dosing member (32) provided to supply the or each projecting member (29) with coating compound at a controlled rate.

4. The device according to any one of the preceding claims, **characterized in that** the brushes (17) have an outer diameter between 60 and 180 mm.

5. The device according to anyone of the preceding claim, **characterized in that** the drying area (5) is arranged inside a closed enclosure (7), said closed enclosure (7) including at least one air inlet (43), at least one air outlet (45), and at least one member (49) provided to create an airflow in the closed enclosure (7) from the air inlets (43) to the air outlet (45).

6. The device according to claim 5, **characterized in that** the drying conveyor (31) comprises a segment (41) for moving the food products from the coating area (3) to an outlet (33), the or each air inlet (43) being situated at a level below the movement segment (41) and the air outlet (45) being situated at a level above the movement segment (41).

7. The device according to claim 5 or 6, **characterized in that** the airflow member (49) has an air suction inlet (51) and an air discharge outlet (53) and is capable of creating, between the outlet (53) and the inlet (51), a pressure difference greater than 30 mm of water column.

8. The device according to any one of the preceding claims, **characterized in that** the driving elements (37) are rollers.

9. Use of a coating compound comprises one or several filmogenic agents in a solvent, the solvent being chosen from amongst water, an alcohol, or an alkane, in a coating device according to anyone of the preceding claims.

10. Use according to claim 9, **characterized in that** the filmogenic agent is shellac.

11. Use according to claims 9 or 10 **characterized in that** said compound also comprises one or more terpenes.

12. Use according to any one of the claim 9 to 11, **characterized in that** said compound also comprises a base.

## Patentansprüche

1. Vorrichtung zum Umhüllen von Lebensmittelprodukten, wobei die Vorrichtung (1) eine Umhüllungszone (3) besitzt, die umfasst:
- eine Umhüllungsfördereinrichtung (11), die dazu vorgesehen ist, die Lebensmittelprodukte in einer longitudinalen Richtung vorwärts zu bewegen;
- eine Vorrichtung (13) zum Aufbringen einer Umhüllungszusammensetzung auf die auf der Umhüllungsfördereinrichtung (11) vorwärts bewegten Lebensmittelprodukte;
wobei die Umhüllungsfördereinrichtung (11) einen Rahmen (15), mehrere rotierende Bürsten (17), die in der longitudinalen Richtung in Bezug auf den Rahmen (15) fest sind, und eine Motoranordnung (19) zum rotatorischen Antreiben der Bürsten (17) um jeweilige transversale Achsen in Bezug auf den Rahmen (15) enthält, wobei die Bürsten (17) so angeordnet sind, dass sie zusammen eine Oberfläche (21) zum Tragen und Vorwärtsbewegen der Lebensmittelprodukte definieren, und vorgesehen sind, um die Lebensmittelprodukte während der Aufbringung der Umhüllungszusammensetzung zu rollen, wobei die Vorrichtung (1) eine Trocknungszone (5) für die Lebensmittelprodukte besitzt, die eine Trocknungsfördereinrichtung (31) enthält, die dazu vorgesehen ist, die die Umhüllungszone (3) längs einer Verlagerungsrichtung verlassenden umhüllten Lebensmittelprodukte vorwärts zu bewegen, **dadurch gekennzeichnet, dass** die Trocknungsfördereinrichtung (31) einen Rahmen (35), mehrere Elemente (37) zum Vorwärtsbewegen der Lebensmittelprodukte und eine Motoranordnung (39) zum Verlagern der Vorwärtsbewegungselemente (37) in Bezug auf den Rahmen (35) längs der Verlagerungsrichtung enthält, wobei die Vorwärtsbewegungselemente (37) zwischen sich in der Verlagerungsrichtung einen Zwischenraum (38) mit einer Breite von wenigstens 10 mm aufweisen, der der Zirkulation von Luft zum Trocknen der Lebensmittelprodukte dient.

2. Vorrichtung nach Anspruch 1, **dadurch gekennzeichnet, dass** die Aufbringungsvorrichtung (13) vorgesehen ist, um die Umhüllungszusammensetzung auf die Lebensmittelprodukte mit einem gesteuerten Druck, der größer als der Atmosphärendruck ist, zu werfen.

3. Vorrichtung nach Anspruch 2, **dadurch gekennzeichnet, dass** die Aufbringungsvorrichtung (13) wenigstens ein Wurforgan (29), das über der Umhüllungsfördereinrichtung (11) angeordnet ist, und ein Dosierungsorgan (32), das vorgesehen ist, um das oder jedes Wurforgan (29) mit der Umhüllungszusammensetzung mit einem gesteuerten Durchsatz zu versorgen, umfasst.

4. Vorrichtung nach einem der vorhergehenden Ansprüche, **dadurch gekennzeichnet, dass** die Bürsten (17) einen Außendurchmesser im Bereich von 60 bis 180 mm aufweisen.

5. Vorrichtung nach einem der vorhergehenden Ansprüche, **dadurch gekennzeichnet, dass** die Trocknungszone (5) in einem geschlossenen Behälter (7) angeordnet ist, wobei der geschlossene Behälter (7) wenigstens einen Lufteinlass (43), wenigstens einen Luftauslass (45) und wenigstens ein Organ (49), das vorgesehen ist, um eine Luftzirkulation in dem geschlossenen Behälter (7) von den Lufteinlässen (43) zu dem Luftauslass (45) zu erzeugen, enthält.

6. Vorrichtung nach Anspruch 5, **dadurch gekennzeichnet, dass** die Trocknungsfördereinrichtung (31) ein Teilstück (41) zum Verlagern von Lebensmittelprodukten von der Umhüllungszone (3) bis zu einem Ausgang (33) enthält, wobei sich der oder jeder Lufteinlass (43) auf einer Höhe unterhalb des Verlagerungsteilstücks (41) befindet und wobei sich der Luftauslass (45) auf einer Höhe über dem Verlagerungsteilstück (11) befindet.

7. Vorrichtung nach Anspruch 5 oder 6, **dadurch gekennzeichnet, dass** das Luftzirkulationsorgan (49) einen Luftansaugeinlass (51) und einen Luftausstoßauslass (43) aufweist und dazu ausgelegt ist, zwischen dem Auslass (53) und dem Einlass (51) einen Druckunterschied größer als 30 mm Wassersäule zu erzeugen.

8. Vorrichtung nach einem der vorhergehenden Ansprüche, **dadurch gekennzeichnet, dass** die Vorwärtsbewegungselemente (37) Rollen sind.

9. Verwendung einer Umhüllungszusammensetzung, die ein oder mehrere Filmbildungsmittel in einem Lösungsmittel enthält, wobei das Lösungsmittel aus Wasser, einem Alkohol oder einem Alkan gewählt ist, in einer Umhüllungsvorrichtung nach einem der vorhergehende Ansprüche.

10. Verwendung nach Anspruch 9, **dadurch gekennzeichnet, dass** das Filmbildungsmittel roter japanischer Lack ist.

11. Verwendung nach Anspruch 9 bis 10, **dadurch gekennzeichnet, dass** die Zusammensetzung außerdem ein oder mehrere Terpene enthält.

12. Verwendung nach einem der Ansprüche 9 bis 11, **dadurch gekennzeichnet, dass** die Zusammensetzung außerdem eine Base enthält.
